# EUROPEAN PATENT APPLICATION

(11) **EP 4 579 093 A1**
(43) Date of publication of application: **02.07.2025**
(21) Application number: 23220322.4
(22) Date of filing: 27.12.2023
(51) Int. Cl.: F15B 13/04, F15B 20/00, B64C 13/42, B64C 13/44

(54) **HYDRAULIC VALVE**

(71) Applicant: Microtecnica S.r.l., 10126 Turin (IT)
(72) Inventor: MORNACCHI, Andrea, Torino, 10126 (IT); MOLINELLI, Dario, Carnate, 20866 (IT); SAVINO, Dario, Palazzolo Vercellese, 13040 (IT); QUAGLIA, Enrico, Torino, 10023 (IT); ROMBOLA', Federico, Drapia, 89862 (IT)
(74) Representative: Dehns

(57) **Abstract**

An integrated three function valve (ITFV) for an actuator of a flight control surface, the ITFV comprising: an inner spool actuable in a first direction and a second direction responsive to a pressure differential acting across the inner spool; an intermediate spool actuable in the first direction and second direction between an active position and a bypass position; wherein the inner spool is located within the intermediate spool.

## Description

The present disclosure relates to an integrated three function valve (ITFV) for an actuator of a flight control surface.

Flight control surfaces in fixed wing or rotary aircraft are typically actuated via hydraulic systems and in particular hydraulic actuators. To provide redundancy in the event that a hydraulic actuator fails, a flight control surface may be provided with two or more hydraulic actuators operating on the same flight control surface, e.g. operating in parallel or in a tandem configuration. Failure of one actuator therefore need not necessarily render the control surface inoperable as the remaining operable actuator may still actuate the control surface.

In the event that an actuator fails, for example if it becomes stuck, it is advantageous to hydraulically bypass the failed actuator such that the control surface can move freely, which in turn decreases the resistance the remaining actuator(s) must overcome to actuate the control surface. It is also advantageous to monitor differential pressure in the actuator e.g. in order to balance the force generated by each actuator, which can be useful to limit the deformations and stress of the wing surface and provide pressure relief when necessary to prevent damage to the flight control surface and the aircraft structure.

The present disclosure provides an integrated three function valve (ITFV) for an actuator of a flight control surface. The integrated three function valve (ITFV) provides the functions of differential pressure sensing, pressure relief and bypass into a single valve.

According to a first aspect of the invention, an integrated three function valve (ITFV) for an actuator of a flight control surface is provided, the ITFV comprising: an inner spool actuable in a first direction and a second direction responsive to a pressure differential acting across the inner spool; an intermediate spool actuable in the first direction and second direction between an active position and a bypass position; wherein the inner spool is located within the intermediate spool.

Optionally, the ITFV comprises an activation chamber for receiving hydraulic fluid, and a bypass spring, wherein the intermediate spool is actuable based upon the forces from the bypass spring and hydraulic fluid in the activation chamber.

Optionally, the ITFV comprises a first pressure chamber and a second pressure chamber, and wherein the inner spool is actuable in response to a pressure difference between the first pressure chamber and the second pressure chamber.

Optionally, the ITFV comprises a pressure differential spring configured to bias the inner spool towards an equilibrium position.

Optionally, the ITFV comprises a solenoid piston operable to actuate the intermediate spool to the bypass position.

Optionally, the ITFV is configured such that in the event the inner spool is fixed relative to the intermediate spool a force acting on the inner spool above a threshold will drive the intermediate spool to the bypass position.

Optionally, the ITFV comprises a position sensor configured to measure the position of the inner spool.

According to a second aspect of the invention, a hydraulic system for a flight control surface is provided, comprising: the ITFV according to the first aspect of the invention, optionally including any of the optional features of the first aspect of the invention; a hydraulic actuator comprising a first actuator chamber and a second actuator chamber, wherein the inner spool of the ITFV is actuable based upon a pressure difference between the first actuator chamber and the second actuator chamber.

Optionally, the ITFV is a first ITFV and the system comprises a second ITFV according to the first aspect of the invention, optionally including any of the optional features of the first aspect.

According to a third aspect of the invention, an aircraft is provided comprising the ITFV of the first aspect of the invention, optionally including any of the optional features of the first aspect of the invention, and/or the hydraulic system according to the second aspect of the invention, optionally including any of the optional features of the second aspect of the invention.

According to a fourth aspect of the invention, a method of operating an ITFV is provided, comprising: actuating an intermediate spool to an active position by supplying hydraulic fluid at pressure greater than a predetermined activation pressure to an activation chamber of the ITFV, and actuating the intermediate spool to a bypass position if pressure in the activation chamber falls below the predetermined activation pressure; actuating an inner spool in a first direction and/or a second direction responsive to a pressure differential acting across the inner spool; wherein the inner spool is located within the intermediate spool.

Optionally, actuating the inner spool comprises actuating the inner spool responsive to a pressure difference between a first pressure chamber and a second pressure chamber of the ITFV.

Optionally, the method comprises measuring the position of the inner spool and determining a pressure difference of the chambers based on the measured position.

Optionally, the method comprises fixing the position of the inner spool relative to the intermediate spool and thereby driving the intermediate spool.

According to a fifth aspect of the invention a method of operating a hydraulic system comprising two ITFVs is provided, the method comprising performing the method according to the fourth aspect of the invention, optionally including any of the optional features of the fourth aspect of the invention, for each ITFV.

According to another aspect of the invention, there is provided an integrated three function valve (ITFV) comprising an inner spool and an intermediate spool, wherein the intermediate spool is actuable by the inner spool e.g. by a force acting upon the inner spool. The intermediate spool may be actuable by the inner spool in the event of the inner spool jamming or seizing with the intermediate spool. The inner spool may be inside the intermediate spool. The ITFV may therefore provide jam tolerance e.g. for the inner spool. The ITFV may comprise any of the features of the other aspects of the invention as recited herein. The ITVF may be arranged and/or configured for use with any of the method aspects of the invention as described herein. Any of the other aspects of the invention may comprise the features of this aspect of the invention.

According to another aspect of the invention, there is provided a method of operating an integrated three function valve comprising an inner spool and an intermediate spool, the method comprising driving the intermediate spool using the inner spool. The method may comprising seizing the inner spool relative to the intermediate spool and thereby driving the intermediate spool e.g. using a jam to transfer force from the inner spool to the intermediate spool. The method may comprise providing, arranging, and/or using any of the features of the ITFV as described herein with reference to any of the other aspects of the invention. Any of the other aspects of the invention may comprise the features of this aspect of the invention.

Some exemplary embodiments of the present disclosure will now be described by way of example only and with reference to the accompanying drawings, in which:
Figure 1 shows a hydraulic system comprising a hydraulic valve;
Figure 2 shows the hydraulic valve in a bypass mode with the hydraulic system disabled;
Figure 3 shows the hydraulic valve in a bypass mode;
Figure 4 shows the hydraulic valve in an active mode with null differential pressure between a first actuator chamber and a second actuator chamber;
Figure 5 shows the hydraulic valve in an active mode with pressure in the first actuator chamber greater than the pressure in the second actuator chamber;
Figure 6 shows the hydraulic valve in an active mode with pressure in the second actuator chamber greater than the pressure in the first actuator chamber;
Figure 7 shows the hydraulic valve in an active mode with pressure in the first actuator chamber greater than the pressure in the second actuator chamber and with pressure relief in operation;
Figure 8 shows the hydraulic valve in an active mode with pressure in the second actuator chamber greater than the pressure in the first actuator chamber and with pressure relief in operation;
Figure 9 shows the hydraulic valve in a bypass mode with the inner spool seized or jammed and with pressure in the first actuator chamber greater than the pressure in the second actuator chamber; and
Figure 10 shows the hydraulic valve in a bypass mode with the inner spool seized or jammed and with pressure in the second actuator chamber greater than the pressure in the first actuator chamber.

As described herein, according to the first aspect of the invention an integrated three function valve (ITFV) for an actuator of a flight control surface is provided, the ITFV comprising: an inner spool actuable in a first direction and a second direction responsive to a pressure differential acting across the inner spool; an intermediate spool actuable in the first direction and second direction between an active position and a bypass position; wherein the inner spool is located within the intermediate spool.

The ITFV is a valve that provides the functions of pressure differential sensing, pressure relief and bypass.

The pressure differential sensing function may comprise sensing the difference in pressure between two ports of the ITFV. The two ports may be for fluid communication with two respective chambers of an actuator. Hence the pressure differential sensing function may advantageously be used to sense the pressure differential acting between chambers of an actuator.

The pressure relief function may comprise fluidly coupling one or both of said ports to a hydraulic return port(s) for relieving the pressure in the event that the differential pressure is greater than a predetermined threshold. The pressure relief function may comprise fluidly coupling the port that has the higher pressure to a hydraulic return port(s) for relieving the pressure.

The bypass function may comprise fluidly coupling said ports to a hydraulic return port(s) and/or may comprise closing one or more input ports of the ITFV. Advantageously the ITFV may be operable to hydraulically bypass a downstream component of the ITFV (e.g. the actuator) when in use in a hydraulic system.

Advantageously, because the inner spool is located within the intermediate spool the ITFV is provided with jam tolerance. That is, in the event that a jam of the inner spool were to occur, e.g. due to debris, chips or the like, the inner spool will become effectively fixed to the intermediate spool, and, as a result, force applied to actuate the inner spool will be transferred to the intermediate spool which may cause it to enter the bypass mode.

The inner spool may be concentric with the intermediate spool. The inner spool may be actuable relative to the intermediate spool. The inner spool may be slidingly disposed within the intermediate spool, and may be in direct contact with the intermediate spool e.g. at portions along its length. The inner spool may slide back-and-fore relative to the intermediate spool, depending upon hydraulic conditions in e.g. the actuator and/or a wider hydraulic system. The second direction may be opposite the first direction, such that the inner spool and/or intermediate spool is actuable back-and-fore along its axis.

The inner spool may be configured to move in the first direction and/or the second direction by an amount proportional to a pressure differential acting on the inner spool e.g. between chambers defined thereby. Advantageously, because the position of the inner spool in the first and second direction is proportional to the pressure differential acting on the inner spool, the ITFV may be configured to provide pressure sensing and pressure relief based on the position of the inner spool. For example, when the ITFV is used in conjunction with an actuator of a flight control surface, e.g. the IFTV being fluidly coupled to the actuator, a pressure differential across the actuator chambers would cause the inner spool to move in either the first or second direction, which therefore allows measurement of the pressure differential across the actuator chambers e.g. using any suitable sensor, such as an LVDT as described herein. The movement of the inner spool relative to the intermediate spool may also provide pressure relief if the pressure differential were to surpass a predetermined threshold, and e.g. therefore move the inner spool far enough relative to the intermediate spool.

The inner spool may be actuable in the first direction and/or the second direction to place the ITFV in a throughput configuration and a pressure relief configuration. The throughput configuration and pressure relief configuration may be entered with the intermediate spool in the active position. The throughput configuration may comprise the inner spool in an equilibrium position. The throughput configuration may comprise the inner spool in a range of positions from the equilibrium position in the first direction and/or the second direction. The pressure relief configuration may comprise the inner spool in a position in the first and/or second direction from the equilibrium position by an amount greater than a predetermined threshold. In other words, the inner spool may be moveable from an equilibrium position in either of the first or second direction and the ITFV may remain in the throughput configuration until the inner spool reaches and passes a threshold position in either of the first or second direction at which point the ITFV is placed in the pressure relief configuration. Thus, the inner spool may move back and fore within a given range of positions based on a pressure differential across it, but if it moves too far in either direction it may vent hydraulic fluid and thereby provide pressure relief. Thus, the inner spool may provide pressure relief in the event that the pressure differential across it surpasses the predetermined threshold. If the pressure differential does not exceed the predetermined threshold, the inner spool may provide the pressure differential sensing function.

In the throughput configuration the ITFV may be configured to output hydraulic fluid that is inputted to it. In other words, in the throughput configuration the ITFV may act as a conduit. For example, in a hydraulic system, an Electro-Hydraulic Servovalve (EHSV) may have two outputs that are in hydraulic fluid communication with two ports of the ITFV and the ITFV may fluidly communicate those two outputs to two ports of the ITFV that are in hydraulic fluid communication with two hydraulic chambers of an actuator.

In its active position, the intermediate sleeve may permit operation of the inner spool between the throughput configuration and the pressure relief configuration e.g. such that the valve is 'active'. In its bypass position, the intermediate sleeve may connect ports of the ITFV to a return port (and therefore a return line of a wider hydraulic system) to thereby bypass the actuator.

The ITFV may comprise an activation chamber for receiving hydraulic fluid, and a bypass spring, wherein the intermediate spool is actuable based upon the forces from the bypass spring and hydraulic fluid in the activation chamber.

The activation chamber may be a chamber defined by an outer surface of the intermediate spool and an inner surface of a sleeve or housing of the ITFV. In other words, the activation chamber may be a chamber bounded by an outer surface of the intermediate spool and an inner surface of a sleeve or housing of the ITFV. The intermediate spool may be located concentrically within the sleeve and/or the housing.

The ITFV may be arranged so that in the event pressure within the activation chamber exceeds a predetermined activation pressure, the resulting force on the intermediate spool drives the intermediate spool against the bypass spring to the active position. If the pressure within the activation chamber exceeds the predetermined activation pressure, the force produced by the pressure in the activation chamber, which may be referred to as the activating pressure force, overcomes the force produced by the bypass spring, which may be referred to as the bypass spring force, and hence the intermediate spool is driven into the active position. Thus, the intermediate spool may be actuated to its active position only if pressure in the activation chamber is high enough.

In the event that pressure within the activation chamber is below the predetermined activation pressure, the resulting force on the intermediate spool (e.g. from the bypass spring) drives the intermediate spool to the bypass position. In the event that the pressure within the activation chamber is less than the predetermined activation pressure the bypass spring force produced by the bypass spring overcomes the activating pressure force produced by the pressure in the activation chamber (or lack thereof) and hence the intermediate spool is driven into the bypass position.

The ITFV may be arranged such that it enters the active configuration if the pressure activating force exceeds the bypass spring force and enters the bypass configuration if the bypass spring force exceeds the pressure activating force. In use, the activation chamber may be connected to a supply line of a hydraulic system and the activation chamber and bypass spring may be configured such that the intermediate spool is moved to the active position in the event that pressure in the hydraulic system is high enough. Otherwise the intermediate spool may remain (or move to) its bypass position. Hence, in the event of a failure in the hydraulic system, pressure in the supply line, and therefore pressure in the activation chamber will fall and the intermediate spool will enter/remain in the bypass position. The ITFV may therefore be failsafe in this respect.

The bypass spring may be located between a mechanical stop of the ITFV at one end and the intermediate spool at the other end. The bypass spring may be located between a mechanical stop of the ITFV at one end and an intermediate sleeve of the ITFV that is coupled to the intermediate spool at the other end. The bypass spring may be concentric with the intermediate sleeve and/or the inner spool. It may be arranged to bias the intermediate spool in the second direction, and/or to oppose force acting on the intermediate spool from hydraulic fluid in the activation chamber. The bypass spring may be arranged to actuate the intermediate spool to the bypass position unless prevented from doing so by pressure in the activation chamber above the predetermined threshold. Thus, the ITFV may be arranged such that the intermediate spool is in its bypass position unless the hydraulic system is operating at sufficient pressure.

The activation chamber may be arranged in use to receive hydraulic fluid from a hydraulic system e.g. hydraulic fluid at a supply pressure from a hydraulic system as described herein with reference to the second aspect of the invention. The intermediate spool may be configured such that pressure in the activation chamber urges it in the first direction e.g. by a flange or the like.

The position of the intermediate spool may therefore depend upon the balance of forces from the bypass spring on the one hand, and pressure in the activation chamber on the other hand. Unless force from pressure in the activation chamber overcomes force from the bypass spring, the intermediate sleeve with be in the bypass position. Otherwise it will move to the active position.

The ITFV may comprise a first pressure chamber and a second pressure chamber, and the inner spool may be actuable in response to a pressure difference between the first pressure chamber and the second pressure chamber.

The position of the inner spool may therefore depend upon the balance of forces from pressure within the first pressure chamber and the second pressure chamber. The first pressure chamber may be configured so that pressure therein urges the inner spool in the first direction. The second pressure chamber may be configured so that pressure therein urges the inner spool in the second direction.

The first pressure chamber may be defined by an outer surface of the inner spool and an inner surface of the intermediate spool. The inner spool and intermediate spool may be configured such that the first pressure chamber is bounded by an outer surface of the inner spool, a first land of the inner spool, a second land of the inner spool and an inner surface of the intermediate spool.

The second pressure chamber may be defined by an outer surface of the inner spool and an inner surface of the intermediate spool. The inner spool and the intermediate spool may be configured such that the second pressure chamber is bounded by an outer surface of the inner spool, a fourth land, a fifth land, and an inner surface of the intermediate spool.

The inner spool may be configured to move in the first direction and/or the second direction by an amount proportional to a pressure differential between the first pressure chamber and the second pressure chamber. Advantageously, because the position of the inner spool in the first and second direction is proportional to the pressure differential between the first pressure chamber and second pressure chamber the ITFV may be configured to provide pressure sensing and pressure relief based on the position of the inner spool.

For example, when the ITFV is used in conjunction with an actuator of a flight control surface, e.g. the IFTV being fluidly coupled to the actuator, such that a pressure differential across actuator chambers is applied to the first pressure chamber and the second pressure chamber, the inner spool would be caused to move in either the first or second direction, which therefore allows measurement of the pressure differential across the actuator chambers and pressure relief if it were to surpass a predetermined threshold.

When pressures in the first pressure chamber and second pressure chamber are equal, the inner spool will occupy an equilibrium position. When pressure in one pressure chamber exceeds pressure in the other, the inner spool will move from the equilibrium position by a corresponding amount. The larger the difference in pressures, the larger the movement of the inner spool from the equilibrium position.

The ITFV may comprise a pressure differential spring configured to bias the inner spool towards an equilibrium position.

In the event that a pressure difference occurs between the first pressure chamber and the second pressure chamber, a pressure differential force may act on the inner spool to urge the inner spool in the first or second direction dependent on which of the first pressure chamber and the second pressure chamber has the relatively high pressure and which has the relatively low pressure.

In the event that the inner spool is urged in the first or second direction the pressure differential spring may provide a pressure differential spring force acting in the opposing direction. That is, in the event that the inner spool is urged in the first direction, the pressure differential spring force may act in the second direction. In the event that the inner spool is urged in the second direction, the pressure differential spring force may act in the first direction.

The pressure differential spring force may increase as compression of the pressure differential spring increases as a function of the stiffness of the spring. Therefore, in the event that the inner spool moves in the first or second direction due to the pressure differential force, the pressure differential spring force may increase until it matches the pressure differential force at which point the forces will be balanced and the inner spool may stop moving in the first or second direction. Advantageously, because the movement of the inner spool in the first and second direction may be a function of the stiffness of the pressure differential spring and the pressure difference acting between the first pressure chamber and the second pressure chamber, the pressure difference can be measured based on the position of the inner spool.

Furthermore, because movement of the inner spool in the first and second direction may be a function of the stiffness of the pressure differential spring, the pressure differential at which the ITFV is configured to enter the pressure relief configuration can be set by selecting the appropriate stiffness of the pressure differential spring.

The pressure differential spring may be located concentrically about the inner spool. The pressure differential spring may be located within the intermediate spool. The pressure differential spring may be located with an intermediate sleeve. The intermediate sleeve may be affixed to the intermediate spool and e.g. may move rigidly therewith. The pressure differential spring may be located about the inner spool and within the intermediate sleeve.

The ITFV may comprise a first inner spool bushing and a second inner spool bushing. The first inner spool bushing and the second inner spool bushing may be located about the inner spool and the pressure differential spring may be located between the first inner spool bushing and the second inner spool bushing. The first inner spool bushing and the second inner spool bushing may be located within the intermediate spool. The first inner spool bushing and the second inner spool bushing may be located within the intermediate sleeve. The first and second inner spool bushing may be in sliding engagement with the inner spool, and may have a limited sliding movement relative thereto.

The first inner spool bushing and the second inner spool bushing may be arranged to place the delta pressure spring into compression in the event that the inner spool is moved in either the first or second direction from an equilibrium position.

The ITFV may be configured such that movement of the inner spool in the first direction causes the first inner spool bushing to abut part of the ITFV and thus continued movement of the inner spool in the first direction causes the pressure differential spring to compress. The ITFV may be configured such that movement of the inner spool in the second direction causes the second inner spool bushing to abut another part of the ITV and thus continued movement of the inner spool in the second direction causes the pressure differential spring to compress.

Advantageously, the arrangement of the first inner spool bushing and the second inner spool bushing may enable movement of the inner spool in either of the first or second direction to cause compression of the delta pressure spring thus only a single spring may be required for biasing the inner spool towards an equilibrium position.

The ITFV may comprise a solenoid piston operable to actuate the intermediate spool to the bypass position.

The ITFV may comprise a solenoid chamber and the solenoid piston may be located within the solenoid chamber. The solenoid chamber may be configured in use to receive hydraulic fluid from a hydraulic system, e.g. hydraulic fluid at a supply pressure from a hydraulic system as described herein with reference to the second aspect of the invention. In the event that hydraulic fluid is provided to the solenoid chamber the solenoid piston may actuate the intermediate spool to the bypass position. The ITFV (and/or the hydraulic system) may comprise a solenoid operable to actuate the solenoid piston.

In the event that there is pressure in the solenoid chamber, the pressure may cause a force, which may be referred to as the solenoid force, that acts to urge the solenoid piston against the inner spool. The solenoid force may cause, via the solenoid piston being urged against the inner spool, the inner spool to translate.

The ITFV may be configured such that translation of the inner spool beyond a predetermined threshold causes the intermediate spool to move in the same direction e.g. by urging from the inner spool, the first and second inner spool bushings, or other element of the valve actuable with the inner spool.

The ITFV may comprise an intermediate spool bushing. The intermediate spool bushing may be located concentrically about the inner spool and concentrically within the intermediate spool. The intermediate spool bushing may be affixed to the intermediate spool. The intermediate spool bushing may act as a mechanical stop for the first inner spool bushing or second inner spool bushing in the event that the inner spool moves in the first or second direction.

The ITFV may be configured such that translation of the inner spool beyond a predetermined threshold causes the first inner spool bushing and/or the second inner spool bushing to contact the intermediate spool bushing and urge the intermediate spool in the same direction.

The ITFV may be configured such that the solenoid force is transmitted from the solenoid piston to the intermediate spool to place the intermediate spool in the bypass position via the inner spool.

Advantageously, the ITFV may enter the bypass configuration on demand via operation of the solenoid piston.

The ITFV may be configured such that in the event the inner spool is fixed relative to the intermediate spool a force acting on the inner spool above a threshold will drive the intermediate spool to the bypass position.

Advantageously, even in the event that the inner spool becomes jammed the ITFV may relieve the pressure if it exceeds the threshold. Since the inner spool may be in sliding engagement with the intermediate spool, any seizure or jam of the inner spool - i.e. something that prevents it sliding relative to the intermediate spool and hence fixes its position relative thereto - will cause force on the inner spool to act on the intermediate spool. Hence, the ITFV may be configured and/or arranged so that it uses any jam or seizure of the inner spool to drive the intermediate spool. Thus, the ITFV can enter its bypass configuration even in the event that the inner spool jams or seizes. The ITFV is therefore failsafe in this regard.

The ITFV may be configured such that in the event the solenoid piston is actuated and the inner spool is fixed relative to the intermediate spool (e.g. by a jam, seizure or the like) the solenoid force may be transmitted from the solenoid piston to the intermediate spool to place the intermediate spool in the bypass position via the inner spool. Advantageously, even in the event that the inner spool becomes jammed the ITFV may enter the bypass position on command and relieve the pressure, for example if it exceeds the threshold.

The ITFV may comprise a position sensor configured to measure the position of the inner spool.

Since the position of the inner spool may depend upon the pressure differential across it, the position sensor may therefore be arranged to measure the pressure differential acting on the inner spool.

The position sensor may be a Linear Variable Differential Transformer (LVDT), or any suitable sensor for determining the position of the inner spool.

Advantageously, the position sensor can be used to measure the distance the inner spool has moved in either the first direction or second direction from an equilibrium position, which can subsequently be converted in to a measure of differential pressure acting on the inner spool.

The intermediate spool may therefore be actuable by the inner spool e.g. in the event that the inner spool is driven by a solenoid piston, and/or in the event that the inner spool seizes (e.g. is fixed) relative to the intermediate spool. The intermediate spool may be actuable by a pressure differential across the inner spool. The ITFV may therefore provide jam tolerance if and when the inner spool jams relative to the intermediate spool. The jam tolerance feature may ensure the ability to reach the bypass condition even in the presence of a seized spool or in the presence of chips. The bypass function may isolate the actuator in case of failure and avoid hydraulic lock.

According to the second aspect of the invention a hydraulic system for a flight control surface is provided, comprising: the ITFV of the first aspect of the invention, optionally including any of the optional features of the first aspect of the invention; a hydraulic actuator comprising a first actuator chamber and a second actuator chamber, wherein the inner spool of the ITFV is actuable based upon a pressure difference between the first actuator chamber and the second actuator chamber.

The ITFV may be a first ITFV and the system may comprise a second ITFV according to the first aspect of the invention, optionally including any of the optional features of the first aspect of the invention. The hydraulic system may comprise the two ITFVs in parallel, or in series, and both operable independently to operate with the hydraulic actuator. The hydraulic system may comprise an Electro-Hydraulic Servovalve (EHSV) operable to actuate the hydraulic actuator. The hydraulic system may comprise two EHSVs, each associated with one of the ITFVs.

According to the third aspect of the invention an aircraft is provided comprising the ITFV of the first aspect of the invention, optionally including any of the optional features of the first aspect of the invention, and/or the hydraulic system according to the second aspect of the invention, optionally including any of the optional described features of the second aspect of the invention.

According to the fourth aspect of the invention a method of operating an ITFV is provided, comprising: actuating an intermediate spool to an active position by supplying hydraulic fluid at pressure greater than a predetermined activation pressure to an activation chamber of the ITFV, and actuating the intermediate spool to a bypass position if pressure in the activation chamber falls below the predetermined activation pressure; actuating an inner spool in a first direction or a second direction responsive to a pressure differential acting across the inner spool; wherein the inner spool is located within the intermediate spool.

Actuating the inner spool may comprise actuating the inner spool responsive to a pressure difference between a first pressure chamber and a second pressure chamber of the ITFV.

The method may comprise measuring the position of the inner spool and determining a pressure difference of the chambers based on the measured position.

The method may comprise fixing the position of the inner spool relative to the intermediate spool and thereby driving the intermediate spool. The method may comprise actuating the intermediate spool using the inner spool. The method may comprise using a jam or seizure of the inner spool relative to the intermediate spool to thereby drive the intermediate spool to its bypass position.

According to the fifth aspect of the invention a method of operating a hydraulic system comprising two ITFVs is provided, the method comprising performing the method according to the fourth aspect of the invention, optionally including any of the optionally features of the fourth aspect, for each ITFV.

The methods according to the fourth and fifth aspect may use or be applied to the ITFV of the first aspect and/or the hydraulic system of the second aspect and/or the aircraft according to the third aspect.

According to another aspect of the invention, there is provided an integrated three function valve (ITFV) comprising an inner spool and an intermediate spool, wherein the intermediate spool is actuable by the inner spool e.g. by a force acting upon the inner spool. The intermediate spool may be actuable by the inner spool in the event of the inner spool jamming or seizing with the intermediate spool. The inner spool may be inside the intermediate spool. The ITFV may therefore provide jam tolerance e.g. for the inner spool. The ITFV may comprise any of the features of the other aspects of the invention as recited herein. The ITVF may be arranged and/or configured for use with any of the method aspects of the invention as described herein. Any of the other aspects of the invention may comprise the features of this aspect of the invention.

According to another aspect of the invention, there is provided a method of operating an integrated three function valve comprising an inner spool and an intermediate spool, the method comprising driving the intermediate spool using the inner spool. The method may comprising seizing the inner spool relative to the intermediate spool and thereby driving the intermediate spool e.g. using a jam to transfer force from the inner spool to the intermediate spool. The method may comprise providing, arranging, and/or using any of the features of the ITFV as described herein with reference to any of the other aspects of the invention. Any of the other aspects of the invention may comprise the features of this aspect of the invention.

The following is a detailed description of an integrated three function valve (ITFV) according to the disclosure with reference to the figures.

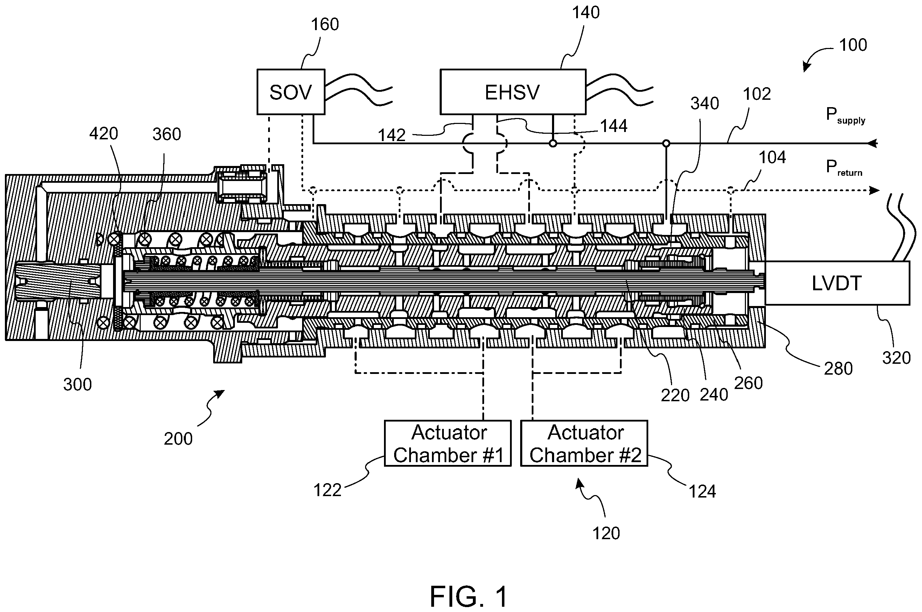

Figure 1 shows an Integrated Three Function Valve (ITFV) 200 within a wider hydraulic system 100. The hydraulic system 100 has a hydraulic fluid supply line 102 and a hydraulic fluid return line 104, for providing relatively high pressure hydraulic fluid and returning relatively low pressure hydraulic fluid respectively. For example, the hydraulic fluid supply line 102 may be connected to a hydraulic pump outlet and the hydraulic fluid return line 104 may be connected to an input end of a hydraulic pump and/or tank. Any suitable arrangement of hydraulic system 100 may be used.

The ITFV 200 is in hydraulic fluid communication with an actuator 120. The actuator 120 is of the type comprising two chambers, i.e. a first actuator chamber 122 and a second actuator chamber 124, separated by a piston (not shown) such that hydraulic fluid output by the valve 200 to each of the two chambers 122, 124 can cause the piston to be driven by the pressure difference between the two chambers 122, 124, which in turn can, for example, drive a control surface of an aircraft (not shown).

The ITFV 200 is also in hydraulic fluid communication with an Electro-Hydraulic Servovalve (EHSV) 140. The EHSV 140 has a first outlet 142 and a second outlet 144. The EHSV may be operable to control the actuator 120, subject to intervention by the ITFV as described herein.

Under active operating conditions of the ITFV 200, which is described in more detail further below, the EHSV 140 is operable to selectively provide relative high pressure hydraulic fluid supply to the first actuator chamber 122 or the second actuator chamber 124 and provide a relative low pressure hydraulic return from the other of the first actuator chamber 122 or second actuator chamber 124 via the ITFV 200, to thereby operate the actuator 120. The ITFV 200 may be referred to as being in a throughput configuration during such operation.

Under active operating conditions of the ITFV 200, the ITFV 200 places the first outlet 142 of the EHSV 140 in fluid communication with the first actuator chamber 122 and the second outlet 144 of the EHSV 140 in fluid communication with the second actuator chamber 124. Thus, control of the actuator 120 is performed via the EHSV 140 selectively placing one of the first outlet 142 and the second outlet 144, and thereby one of the first actuator chamber 122 and the second actuator chamber 124, in fluid communication with hydraulic fluid supply line 102. At the same time, the other of the first outlet 142 and second outlet 144, and thereby the other of the first actuator chamber 122 and the second actuator chamber 124, is placed in fluid communication with hydraulic fluid return line 104.

The hydraulic system 100 comprises a hydraulic solenoid valve (SOV) 160 in fluid communication with the hydraulic fluid supply line 102 and the hydraulic fluid return line 104. The SOV 160 is operable to control the ITFV 200 via control of supply of hydraulic pressure to a solenoid piston 300 of the ITFV 200. When the SOV 160 is de-energized it permits hydraulic pressure to be supplied to the solenoid piston 300 of the ITFV 200. When the SOV 160 is energized it prevents the supply of hydraulic pressure to the solenoid piston 300 of the ITFV 200. For example, Fig. 1 shows the SOV 160 energized and supply of hydraulic pressure to solenoid piston 300 is prevented.

The hydraulic system 100 may utilise two (or more) parallel arrangement(s) of the components shown in Fig. 1 to, by way of example, actuate and control a control surface. By having two actuators 120 acting on the same control surface, each with their own respective ITFV 200, redundancy is provided such that if one actuator 120, for example, were to fail the control surface may still be controlled, at least in part, by the other parallel arrangement. The ITFV 200 itself is described in more detail as follows. In such an instance, the failed actuator should not hydraulically lock the flight control surface, and hence the ITFV is provided with bypass functionality to bypass the actuator.

The ITFV 200 comprises an inner spool 220, an intermediate spool 240 and a sleeve 260 within a valve housing 280. The inner spool 220 is located concentrically within the intermediate spool 240 which is in turn located concentrically within the sleeve 260. The inner spool 220 and the intermediate spool 240 are translatable or actuable to open and close fluid passageways within the ITFV 200, which operation is described in more detail further below. The inner spool 220 and intermediate spool 240 are translatable in a first direction and a second direction opposite to the first direction.

At a first end of the inner spool 220, the ITFV 200 comprises the solenoid piston 300, which is configured to impart a force on the inner spool 220 when hydraulic fluid is supplied to solenoid piston 300, i.e. when the solenoid valve 160 is de-energized and there is sufficient hydraulic pressure in the hydraulic fluid supply line 102.

At a second end of the inner spool 220 opposite the first end, the ITFV 200 comprises a linear variable differential transformer (LVDT) 320. The LVDT 320 is configured to measure the linear position of the inner spool 220.

The ITFV 200 has at least a bypass mode and an active mode and is configured to perform the functions of bypass, differential pressure sensing and differential pressure relief.

In the bypass mode the ITFV 200 performs the bypass function.

The ITFV 200 is configured to enter the bypass mode in the event that the hydraulic system 100 is disabled with the solenoid valve 160 either de-energized or energized. In other words, the ITFV 200 enters the bypass mode in the event that the hydraulic pressure in the hydraulic system 100 decreases below a predetermined minimum pressure threshold regardless of whether the solenoid valve 160 is energized or de-energized. Thus, when hydraulic pressure in the system fails the hydraulic actuator 120 is automatically bypassed.

The ITFV 200 is also configured to enter the bypass mode in the event that the solenoid valve 160 is de-energized. Thus, the bypass mode can be entered on command by de-energizing the solenoid valve 160. Note that whether the solenoid piston 300 is actuated by the SOV 160 being energised or de-energised is a matter of preference, though typically it is preferred that the bypass mode will result from de-energising of the SOV 160, since that provides a failsafe in the event of failure of the SOV 160.

When performing the bypass function the ITFV 200 is configured to: place the first actuator chamber 122 and the second actuator chamber 124 in hydraulic fluid communication with the hydraulic fluid return line 104; close the input of the ITFV 200 fluidly coupled to the first outlet 142 of the EHSV 140, and fluidly connect the second outlet 144 of the EHSV 140 to the hydraulic fluid return line 104.

In the active mode the ITFV 200 is configured to place the first outlet 142 of the EHSV 140 in fluid communication with the first actuator chamber 122 and to place the second outlet 144 of the EHSV 140 in fluid communication with the second actuator chamber 124. In the active mode the ITFV 200 is further configured to perform differential pressure sensing, e.g. during a throughput configuration of the ITFV when in the active mode, and may provide differential pressure relief when required, e.g. when the differential pressure between the first actuator chamber 122 and the second actuator chamber 124 exceeds a differential pressure threshold.

When performing the differential pressure sensing function the ITFV 200 is configured to provide an indication of the differential pressure across the first actuator chamber 122 and the second actuator chamber 124.

When performing the differential pressure relief function the ITFV 200 is configured to connect both the first actuator chamber 122 and the second actuator chamber 124 to hydraulic fluid return line 104 in response to the differential pressure across the first and second actuator chambers 122, 124 exceeding a preselected threshold.

How the ITFV 200 is configured to operate in the bypass mode and the active mode to provide each of the functions described is explained in more detail below.

### Case 1 - Bypass - Hydraulic system disabled with solenoid valve either de-energized or energized.

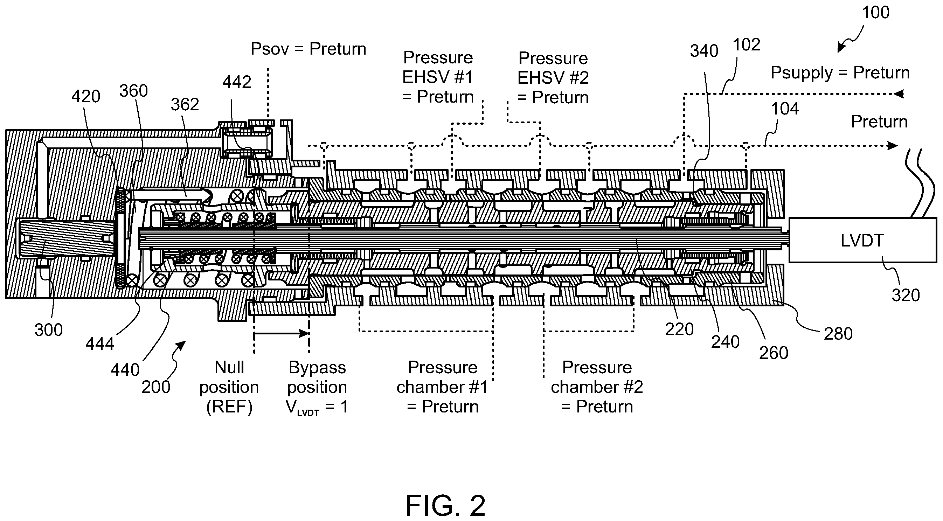

Figure 2 shows the ITFV 200 in the bypass mode with the hydraulic system 100 faulty or disabled. That is, the pressure of hydraulic fluid in the hydraulic fluid supply line 102 is below an operational threshold and, in this example, is equal to the pressure of hydraulic fluid in the hydraulic fluid return line 104.

The ITFV 200 comprises an activation chamber 340 located towards the second end of the ITFV 200 (on the right hand side in the orientation of Fig. 2). The activation chamber 340 is defined (e.g. bounded) by an outer surface of the intermediate spool 240 and an inner surface of the sleeve 260. The activation chamber 340 is fluidly coupled to the hydraulic fluid supply line 102 via an opening in the sleeve 260 and an opening in the valve housing 280.

The activation chamber 340 is arranged to be at the same pressure as fluid in the hydraulic fluid supply line 102. The activation chamber 340 is configured, by the arrangement of the intermediate spool 230 and sleeve 260, such that when hydraulic fluid is supplied thereto a force, which will be referred to as the activating pressure force 342, acts to urge the intermediate spool 240 in the first direction (towards the left hand side in the orientation of Fig. 2).

The ITFV 200 comprises a bypass spring 360 located towards the first end of the ITFV 200 and which extends between a mechanical stop 420 of the ITFV 200 and an outer radial protrusion 442 of an intermediate spool 440. The intermediate spool 440 is affixed to an end portion of the intermediate spool 240 toward the first end of the ITFV 200. With the exception of outer radial protrusion 442, the intermediate spool 440 is located concentrically within bypass spring 360.

The bypass spring 360 is configured to provide a force, which will be referred to as the bypass spring force 362, on the intermediate spool 240 to urge intermediate spool 240 in the second direction (towards the right hand side in the orientation of Fig. 2). The bypass spring force 362 acts on the radial protrusion 442, which in turn acts on the intermediate spool 240 due to the intermediate spool 240 and the intermediate sleeve 440 being affixed to each other.

The intermediate spool 240 is therefore actuable based on pressure in the activation chamber 340 and the bypass spring 360. The ITFV 200 is thereby configured such that in the event that the pressure in the hydraulic system 100 is insufficient, i.e. the pressure provided by hydraulic fluid supply line 102 is below a threshold, the bypass spring force 362 overcomes the opposing activating pressure force 342 generated by the pressure (or lack thereof) acting in the activation chamber 340 such that the intermediate spool 240 translates in the second direction to a bypass position.

When the intermediate spool 240 translates to the bypass position it causes a displacement of the inner spool 220 in the second direction.

When the intermediate spool 240 is in the bypass position it: closes the fluid passageway between the first outlet 142 of the EHSV 140 and the first actuator chamber 122; opens a fluid passageway between the first actuator chamber 122 and the hydraulic return line 104; and opens a fluid passageway between the second actuator chamber 124 and the hydraulic return line 104.

The ITFV 200 is therefore capable of entering the bypass mode automatically in the event that the hydraulic pressure in the hydraulic system 100 is insufficient e.g. due to a fault, or being inactive. The ITFV 200 enters the bypass mode regardless of whether or not the solenoid valve 160 is energized or de-energized when the hydraulic system 100 is disabled.

### Case 2 - Bypass - Solenoid valve de-energized.

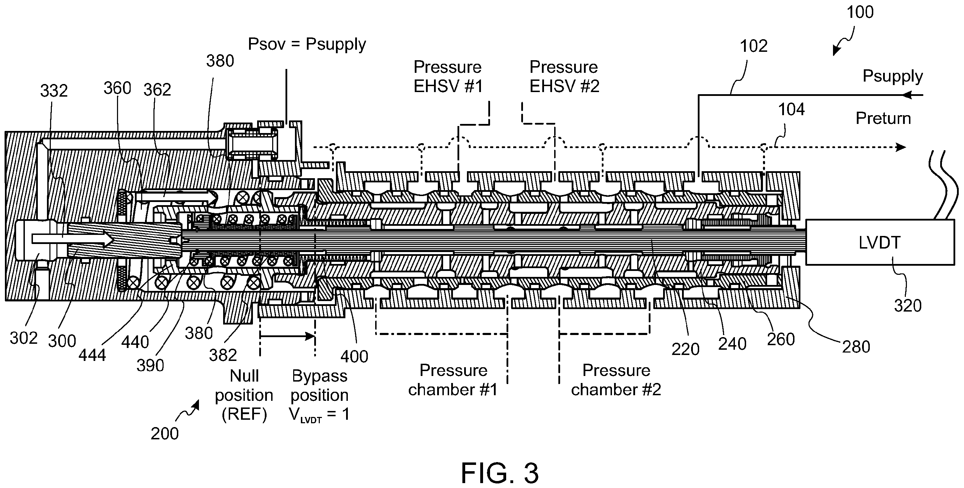

Figure 3 shows the ITFV 200 in the bypass mode with the solenoid valve 160 de-energized and the hydraulic system 100 activated, i.e. the pressure of hydraulic fluid in the hydraulic fluid supply line 102 is above a minimum operational threshold.

The ITFV 200 comprises a solenoid chamber 302 towards the first end of the ITFV 200. The solenoid chamber 302 houses the solenoid piston 300.

The solenoid piston 300 and the solenoid chamber 302 are configured such that in the event that the solenoid valve 160 is de-energized the solenoid chamber 302 is placed in fluid communication with the hydraulic fluid supply line 102. In the event that the solenoid chamber 302 and the hydraulic fluid supply line 102 are in fluid communication, the pressure of the hydraulic fluid in the solenoid chamber 302 will cause a force, which will be referred to as the solenoid force 332, that acts to urge the solenoid piston 300 against the inner spool 220 in the second direction. The solenoid force 332 causes, via the solenoid piston 300 being urged against the inner spool 220, the inner spool 220 to translate in the second direction.

The ITFV 200 comprises a first inner spool bushing 380 and a second inner spool bushing 382. The first and second inner spool bushings 380, 382 are located concentrically about the inner spool 220 and are translatable along part of the inner spool 220.

The ITFV 200 comprises an intermediate spool bushing 400. The intermediate spool bushing 400 is located concentrically about the inner spool 220 and concentrically within the intermediate spool 240. Intermediate spool bushing 400 is affixed to the intermediate spool 240.

Translation of the first and second inner spool bushings 380, 382 along inner spool 220 is limited by mechanical interaction with other components of ITFV 200.

Translation of the second inner spool bushing 382 in the second direction is limited by either the intermediate spool bushing 400 or a first land 221 of the inner spool 220 dependent on the relative positions of the inner spool 220 and the intermediate spool 240.

Translation of the first inner spool bushing 380 in the first direction is limited by either a radially inner radial protrusion 444 of the intermediate spool 440 or by an inner spool protrusion 390, such as an O-ring, flange or the like.

The inner spool bushings 380, 382 and the intermediate spool bushing 400 are positioned such that as the inner spool 220 translates in the second direction, the inner spool protrusion 390 will contact the first inner spool bushing 380. Continued translation of the inner spool 220 will then cause the first inner spool bushing 380 to contact the second inner spool bushing 382. Further continued translation of the inner spool 220 in the second direction will cause the second inner spool bushing 382 to reach and subsequently press against the intermediate spool bushing 400, which then causes the force generated in the solenoid chamber 302 to be applied to intermediate spool 240.

The combination of the solenoid force 332 and the bypass spring force 362 acting on the intermediate spool 240 in the second direction overcomes the activating pressure force 342 acting on the intermediate spool 230 in the first direction and hence the intermediate spool 240 translates in the second direction and into the bypass position.

When the intermediate spool 240 is in the bypass position it: closes the fluid passageway between the first outlet 142 of the EHSV 140 and the first actuator chamber 122; opens a fluid passageway between the first actuator chamber 122 and the hydraulic return line 104; and opens a fluid passageway between the second actuator chamber 124 and the hydraulic return line 104.

In the event that the hydraulic system 100 is active, the ITFV 200 is therefore capable of entering the bypass condition on demand by using (e.g. de-energizing) the solenoid valve 160.

### Case 3 - Active Mode - Null Differential Pressure.

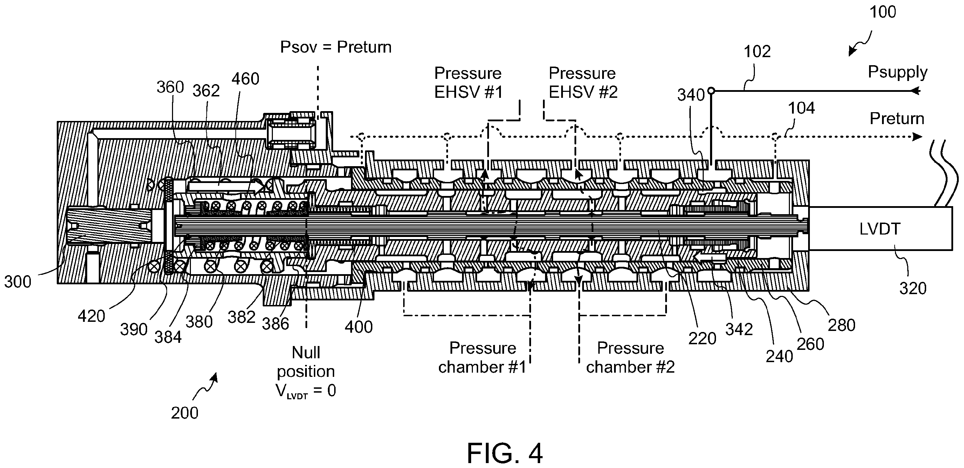

Figure 4 shows the ITFV 200 in the active mode with null, or negligible, differential pressure between the first actuator chamber 122 and the second actuator chamber 124. In other words, the pressure in the first actuator chamber 122 and the second actuator chamber 124 are in equilibrium.

In the active mode, the solenoid valve 160 is energized and there is therefore no solenoid force 332 acting on the inner spool 220 or intermediate spool 240 because the solenoid chamber 302 is not in fluid communication with the hydraulic supply line 102.

The activation chamber 340 is in fluid communication with the hydraulic fluid supply line 102 and therefore the activating pressure force 342 acts on the intermediate spool 240 in the first direction.

The activating pressure force 342 overcomes the bypass spring force 362 and hence the intermediate spool 240 and intermediate sleeve 440 translate in the first direction until the intermediate sleeve 440 is stopped by the mechanical stop 420 e.g. by abutment therewith.

The ITFV 200 comprises a pressure differential spring 460 that is located concentrically within the intermediate sleeve 440. The pressure differential spring 460 is located concentrically about the inner spool bushings 380, 382 and the inner spool 220. The pressure differential spring 460 extends between a flange 384 of the first inner spool bushing 380 and a flange 386 of the second inner spool bushing 382. The pressure differential spring 460 is operable to bias the inner spool bushings 380, 382 apart. Compression of the pressure differential spring 460 causes a pressure differential spring force 462 to act on inner spool bushings 380, 382 and subsequently upon the inner spool 220 depending on their relative position with the inner spool 220.

As the intermediate spool 240 translates in the first direction it causes the intermediate spool bushing 400 to contact the second inner spool bushing 382, which causes the pressure differential spring 460 to urge first inner spool bushing 380 into contact with the inner spool protrusion 390. This in turn causes a compression of the pressure differential spring 460 such that the pressure differential spring force 462 is transmitted to the inner spool 220, which causes the inner spool to translate in the first direction until an equilibrium is reached.

Figure 4 illustrates the inner spool 220 and the intermediate spool 240 in said equilibrium. The null position is indicated by the dashed line.

The LVDT 320 is configured such that the equilibrium position of the inner spool 220 and intermediate spool 240 coincides with a zero voltage signal from the LVDT 320, which thereby provides a signal that there is null differential pressure between the first actuator chamber 122 and the second actuator chamber 124.

As is described in more detail below, in the event that there is a pressure differential between the first actuator chamber 122 and the second actuator chamber 124 it causes an imbalance of the forces acting on the inner spool 220, which results in a translation of the inner spool 220, and therefore the output from the LVDT 320 becomes a non-zero voltage and is proportional to the pressure difference between the first actuator chamber 122 and second actuator chamber 124. Thus, the ITFV 200 permits pressure conditions of the actuator to be measured.

### Case 4 - Active Mode - Delta Pressure Chamber 1 > Chamber 2.

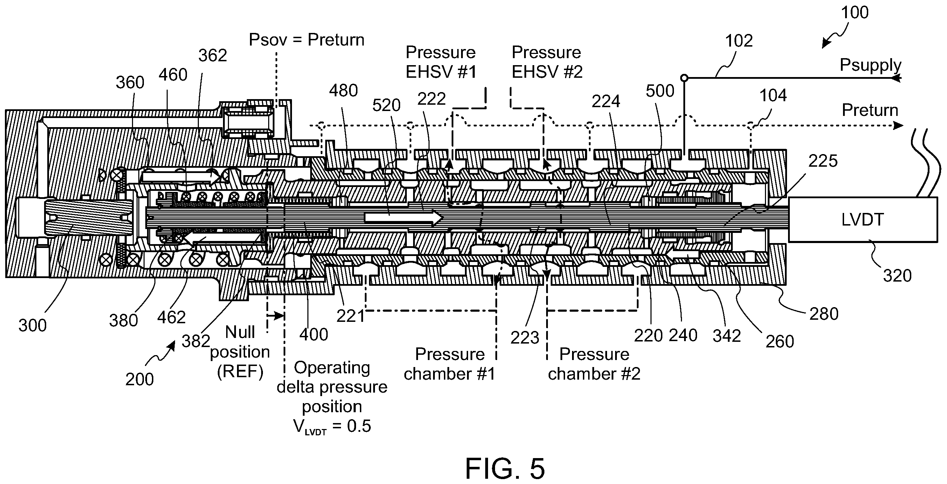

Figure 5 shows the ITFV 200 in the active mode with pressure in the first actuator chamber 122 being greater than the pressure in the second actuator chamber 124. The result of the pressure difference is a relative movement of the inner spool 220 with respect to the intermediate spool 240, the movement being proportional to the pressure difference. Thus, the pressure difference can be measured.

The inner spool 220 comprises a first land 221, a second land 222, a third land 223, a fourth land 224, and a fifth land 225.

The inner spool 220 and intermediate spool 240 are configured such that a first pressure chamber 480 is bounded by an outer surface of the inner spool 220, the first land 221, the second land 222 and an inner surface of the intermediate spool 240. The intermediate spool 240, sleeve 260 and valve housing 280 have openings such that the first pressure chamber 480 is in fluid communication with the first actuator chamber 122.

The inner spool 220 and the intermediate spool 240 are configured such that a second pressure chamber 500 is bounded by an outer surface of the inner spool 220, the fourth land 224, the fifth land 225 and an inner surface of the intermediate spool 240. The intermediate spool 240, sleeve 260 and valve housing 280 have openings such that the second pressure chamber 500 is in fluid communication with the second actuator chamber 124.

In the event that the hydraulic pressure in the first actuator chamber 122 is greater than the hydraulic pressure in the second actuator chamber 124, the pressure in the first pressure chamber 480 is greater than the pressure in the second pressure chamber 500. This pressure differential causes a pressure differential force 520 to act on the inner spool 220 in the second direction.

The pressure differential force 520 causes the inner spool 220 to translate in the second direction by an amount that is a function of the stiffness of the pressure differential spring 460 and hence of the resulting pressure differential spring force 462 acting to oppose the pressure differential force 520. In the event that the inner spool 220 translates in the second direction, the inner spool protrusion 390 urges first inner spool bushing 380 in the second direction which causes the compression of the pressure differential spring 460 as the second inner spool bushing is urged into contact with the intermediate spool bushing 400. The pressure differential spring 460 therefore counteracts the differential pressure force 520.

The amount by which the inner spool 220 translates in the second direction is measured by the LVDT 320 and the LVDT 320 outputs a corresponding signal.

Since the distance by which the inner spool 220 translates before the forces acting on the inner spool reach an equilibrium is a function of the pressure difference between first actuator chamber 122, the second actuator chamber 124, and the stiffness of pressure differential spring 460 (which stiffness is preselected), the output of LVDT 320 can be used to measure the pressure differential between the first actuator chamber 122 and the second actuator chamber 124.

The intermediate spool 240 remains in position towards the first end of the ITFV 200 due to the activating pressure force 342 continuing to exceed the bypass spring force 362.

### Case 5 - Active Mode - Delta Pressure Chamber 2 > Chamber 1.

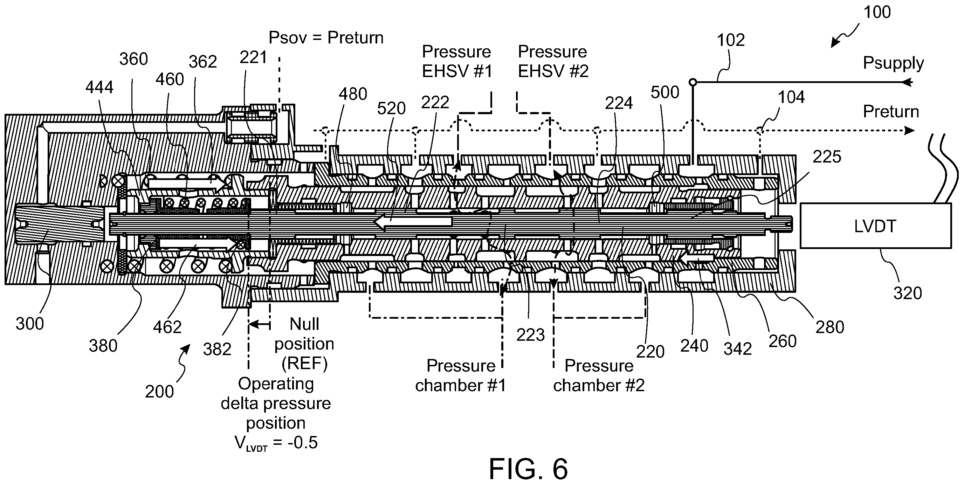

Figure 6 shows the ITFV 200 in the active mode with pressure in the second actuator chamber 124 greater than the pressure in the first actuator chamber 122. The result of the pressure difference is a relative movement of the inner spool 220 with respect to the intermediate spool 240, the movement being proportional to the pressure difference. Thus, the pressure difference can be measured. In general, the situation in Fig. 6 is the mirror or complement of the situation in Fig. 5.

When the hydraulic pressure in the second actuator chamber 124 is greater than the hydraulic pressure in the first actuator chamber 122, the pressure in the second pressure chamber 500 is greater than the pressure in the first pressure chamber 480. This causes a pressure differential force 520 to act on the inner spool 220 in the first direction.

The pressure differential force 520 causes the inner spool 220 to translate in the first direction by an amount that is a function of the stiffness of the pressure differential spring 460 and hence of the resulting pressure differential spring force 462 acting to oppose the pressure differential force 520. In the event that the inner spool 220 translates in the first direction, the first land 221 urges the second inner spool bushing 382 in the first direction which causes the compression of pressure differential spring 460 as the first inner spool bushing 380 is urged into contact with the inner radial protrusion 444 of the intermediate spool 440. The pressure differential spring 460 therefore counteracts the pressure differential force 520.

The amount by which the inner spool 220 translates in the first direction is measured by the LVDT 320 and the LVDT 320 outputs a corresponding signal.

Since the distance by which the inner spool 220 translates before the forces acting on the inner spool 220 reach an equilibrium is a function of the pressure difference between first actuator chamber 122, the second actuator chamber 124, and the stiffness of pressure differential spring 460 (which stiffness is preselected), the output of LVDT 320 can be used to measure the pressure differential between first actuator chamber 122 and the second actuator chamber 124.

The intermediate spool 240 remains in position towards the first end of the ITFV 200 due to the activating pressure force 342 continuing to exceed the bypass spring force 362.

### Case 6 - Active Mode - Relief Delta Pressure Chamber 1 > Chamber 2.

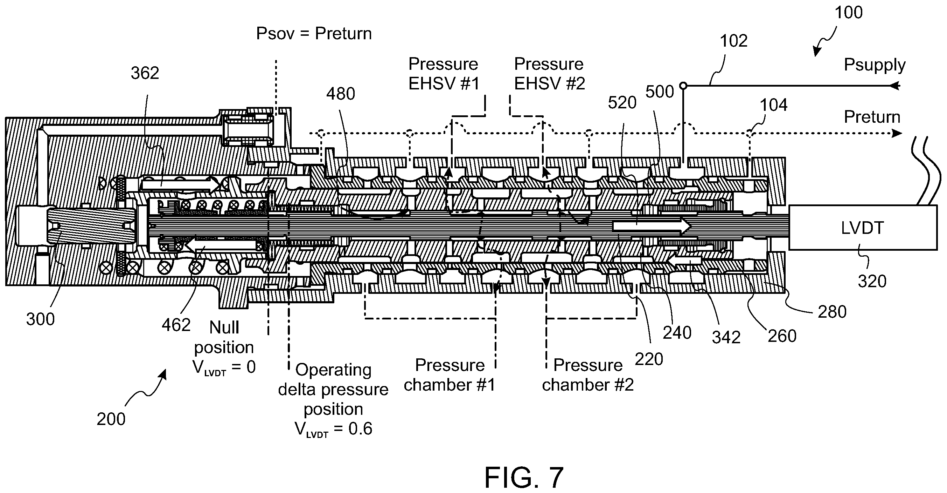

Figure 7 shows the ITFV 200 in the active mode with pressure in the first actuator chamber 122 greater than the pressure in the second actuator chamber 124 and with pressure relief in operation. In the event that the pressure difference between the first actuator chamber 122 and the second actuator chamber 124 is greater than a predetermined threshold, the inner spool 220 moves far enough relative to the intermediate spool 240 to enact the pressure relief configuration shown.

As described previously, in the event that the hydraulic pressure in the first actuator chamber 122 is greater than the hydraulic pressure in the second actuator chamber 124, the pressure in the first pressure chamber 480 is greater than the pressure in the second pressure chamber 500. This pressure differential causes a force 520 to act on the inner spool 220 in the second direction.

As described previously, the pressure differential force 520 causes the inner spool 220 to translate in the second direction by an amount that is a function of the stiffness of the pressure differential spring 460 and hence of the resulting pressure differential spring force 462 acting to oppose the pressure differential force 520.

The inner spool 220, intermediate spool 240, sleeve 260 and housing 280 are configured such that in the event that the inner spool 220 translates over a threshold distance, due to the pressure differential force 520, in the second direction, fluid passageways are opened that place both the first actuator chamber 122 and the second actuator chamber 124 in fluid communication with hydraulic fluid return line 104.

Therefore, if the difference in pressure between the first actuator chamber 122 and the second actuator chamber 124 exceeds a threshold pressure difference, the hydraulic valve provides pressure relief by fluidly coupling the first and second actuator chambers 122, 124 to hydraulic fluid return line 104.

### Case 7 - Active Mode - Relief Delta Pressure Chamber 2 > Chamber 1.

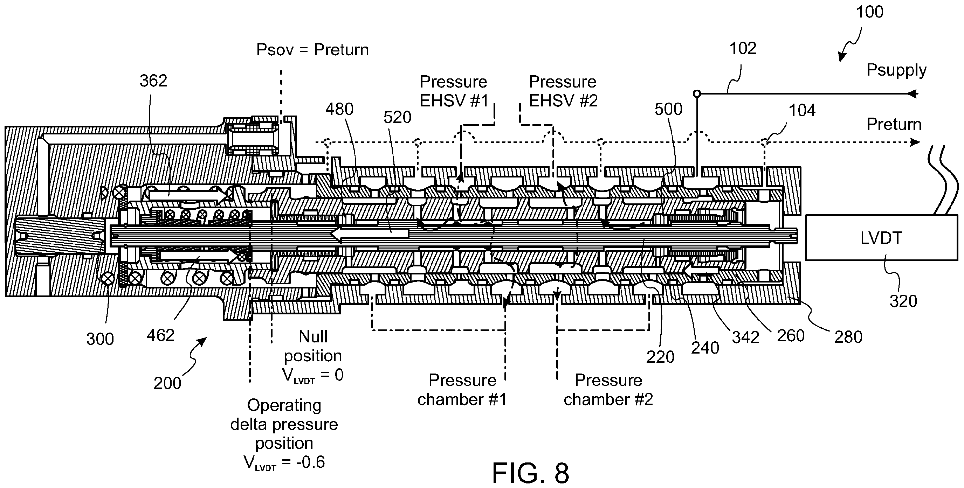

Figure 8 shows the ITFV 200 in the active mode with pressure in the second actuator chamber 124 greater than the pressure in the first actuator chamber 122 and with pressure relief in operation. In the event that the pressure difference between the first actuator chamber 122 and the second actuator chamber 124 is greater than a predetermined threshold, the inner spool 220 moves far enough relative to the intermediate spool 240 to enact the pressure relief configuration shown.

As described previously, in the event that the hydraulic pressure in the second actuator chamber 124 is greater than the hydraulic pressure in the first actuator chamber 122, the pressure in the second pressure chamber 500 is greater than the pressure in the first pressure chamber 480. This causes a pressure differential force 520 to act on the inner spool 220 in the first direction.

As described previously, the pressure differential force 520 causes the inner spool 220 to translate in the first direction by an amount that is a function of the stiffness of the pressure differential spring 460 and hence the resulting pressure differential spring force 462 acting to oppose the pressure differential force 520.

The inner spool 220, intermediate spool 240, sleeve 260 and housing 280 are configured such that in the event that the inner spool 220 translates over a threshold distance, due to the pressure differential force 520, in the first direction, fluid passageways are opened that place both the first actuator chamber 122 and the second actuator chamber 124 in fluid communication with hydraulic fluid return line 104.

Therefore, if the difference in pressure between the first actuator chamber 122 and the second actuator chamber 124 exceeds a threshold pressure difference the hydraulic valve provides pressure relief by fluidly coupling the first and second actuator chambers 122, 124 to hydraulic fluid return line 104.

### Case 8 - Active/Bypass - Seized Inner Spool - Relief Delta Pressure Chamber 1 > Chamber 2.

The ITFV 200 is configured such that in the event that the inner spool 220 were to jam or seize, the ITFV 200 can still enter the bypass mode, thereby ensuring operational safety of the hydraulic system 100 and associated flight control surface. The inner spool 220 is carried within - and moves relative to - the intermediate spool 240, such that any jam or seizure would prevent movement of the inner spool 220 relative to the intermediate spool 240. Thus, in the event of seizure of the inner spool 220, movement of the inner spool (e.g. from solenoid force 332 from the solenoid piston 300 acting on the inner spool 220) will entrain the intermediate spool 240, overcoming the activating pressure force 342.

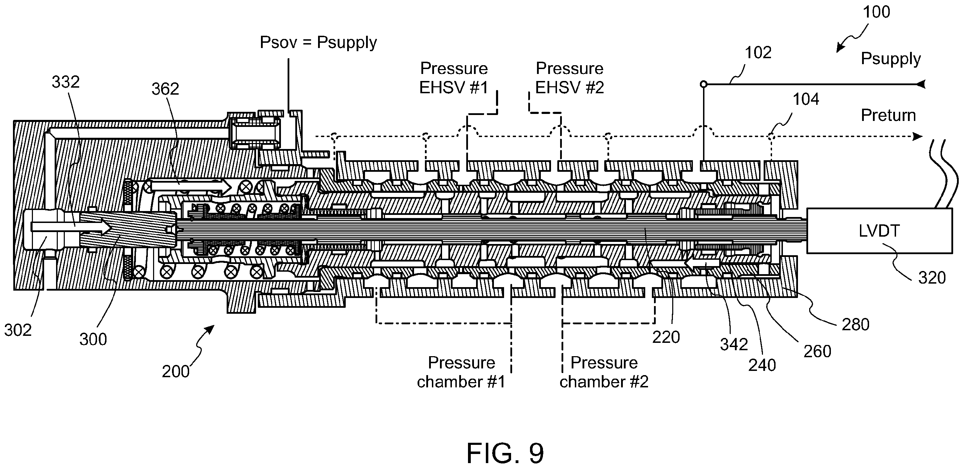

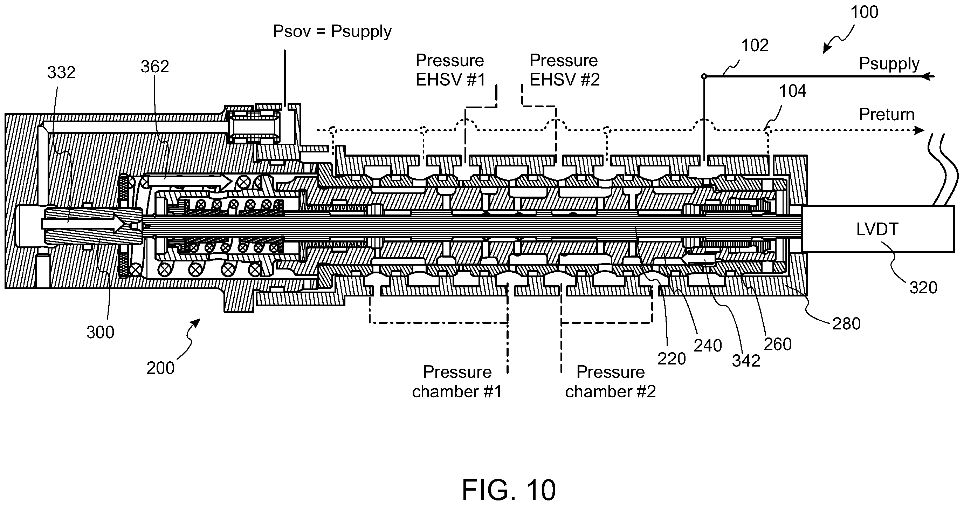

Two extreme cases in which the inner spool 220 might seize is in either of the pressure relief conditions described in connection with Figures 7 and 8. How the ITFV 200 enters the bypass condition in these two extreme cases is described in more detail with reference to Figures 9 and 10 as follows.

Figure 9 shows the ITFV 200 with the inner spool 220 seized and with pressure in the first actuator chamber 122 greater than the pressure in the second actuator chamber 124.

In the event that the inner spool 220 is seized, the pressure relief function described in connection with figure 7 may be inoperable. That is, in the event that the pressure in the first actuator chamber 122 is greater than the second actuator chamber 124 by more than the threshold amount, the inner spool 220 may not translate due to being seized and thus the fluid passageways that would otherwise open to provide pressure relief may not.

In this scenario, to enter the bypass mode despite the inner spool 220 being seized, the SOV 160 can be de-energized (as shown) such that the solenoid chamber 302 is placed in fluid communication with hydraulic fluid supply line 102. The pressure within the solenoid chamber 302 causes the previously described solenoid force 332 that acts to urge solenoid piston 300 against the inner spool 220 in the second direction.

Because the inner spool 220 is seized or jammed, the solenoid force 332 is transmitted from the inner spool 220 to the intermediate spool 260. It may be the debris causing the seizure or jamming of the inner spool that transmits the solenoid force 332 from the inner spool 220 to the intermediate spool 260. The combination of solenoid force 332 and bypass spring force 362 acting on the intermediate spool 260 in the second direction overcomes the activating pressure force 342 acting in the first direction and hence the intermediate spool 260 translates in the second direction to the bypass position, and thereby place the ITFV 200 in the bypass mode. This closes the fluid passageway between the first outlet 142 of the EHSV 140 and the first actuator chamber 122; opens a fluid passageway between the first actuator chamber 122 and the hydraulic return line 104; and opens a fluid passageway between the second actuator chamber 124 and the hydraulic return line 104.

### Case 9 - Active/Bypass - Seized Inner Spool - Relief Delta Pressure Chamber 2 > Chamber 1.

Figure 10 shows the ITFV 200 with the inner spool 220 seized or jammed and with pressure in the second actuator chamber 124 greater than the pressure in the first actuator chamber 122.

In the event that the inner spool 220 is seized the pressure relief function described in connection with figure 8 may be inoperable. That is, in the event that the pressure in the second actuator chamber 124 is greater than the first actuator chamber 122 by more than the threshold amount, the inner spool 220 may not translate due to being seized and thus the fluid passageways that would otherwise open to provide pressure relief may not.

In this scenario, to enter the bypass mode despite the inner spool 220 being seized, the SOV 160 can be de-energized (as shown) such that the solenoid chamber 302 is placed in fluid communication with hydraulic fluid supply line 102. The pressure within the solenoid chamber 302 causes the previously described solenoid force 332 that acts to urge solenoid piston 300 against the inner spool 220 in the second direction.

Because the inner spool 220 is seized or jammed, the solenoid force 332 is transmitted from the inner spool 220 to the intermediate spool 260. It may be the debris causing the seizure or jamming of the inner spool that transmits the solenoid force 332 from the inner spool 220 to the intermediate spool 260.The combination of solenoid force 332 and bypass spring force 362 acting on the intermediate spool 260 in the second direction overcomes the activating pressure force 342 acting in the first direction and hence the intermediate spool 260 translates in the second direction to the bypass position and thereby place the ITFV 200 in the bypass mode.

In the event that the intermediate spool 240 is in the bypass position it: closes the fluid passageway between the first outlet 142 of the EHSV 140 and the first actuator chamber 122; opens a fluid passageways between the first actuator chamber 122 and the hydraulic return line 104; and opens a fluid passageway between the second actuator chamber 124 and the hydraulic return line 104.

The ITFV 200 is therefore capable of entering the bypass condition on demand via de-energizing solenoid valve 160 when the hydraulic system 100 is active even in the event that the inner spool 220 is seized.

## Claims

1. An integrated three function valve (ITFV) for an actuator of a flight control surface, the ITFV comprising:
an inner spool actuable in a first direction and a second direction responsive to a pressure differential acting across the inner spool;
an intermediate spool actuable in the first direction and second direction between an active position and a bypass position;
wherein the inner spool is located within the intermediate spool.

2. The ITFV according to claim 1, comprising
an activation chamber for receiving hydraulic fluid, and
a bypass spring,
wherein the intermediate spool is actuable based upon the forces from the bypass spring and hydraulic fluid in the activation chamber.

3. The ITFV according to claim 1 or 2, comprising
a first pressure chamber and a second pressure chamber, and
wherein the inner spool is actuable in response to a pressure difference between the first pressure chamber and the second pressure chamber

4. The ITFV according to claim 3, comprising
a pressure differential spring configured to bias the inner spool towards an equilibrium position.

5. The ITFV according to any preceding claim, comprising
a solenoid piston operable to actuate the intermediate spool to the bypass position.

6. The ITFV according to any preceding claim, wherein the ITFV is configured such that in the event the inner spool is fixed relative to the intermediate spool a force acting on the inner spool above a threshold will drive the intermediate spool to the bypass position.

7. The ITFV according to any preceding claim, comprising a position sensor configured to measure the position of the inner spool.

8. A hydraulic system for a flight control surface, comprising:
the ITFV as claimed in any preceding claim;
a hydraulic actuator comprising a first actuator chamber and a second actuator chamber,
wherein the inner spool of the ITFV is actuable based upon a pressure difference between the first actuator chamber and the second actuator chamber.

9. The hydraulic system according to claim 8, wherein
the ITFV is a first ITFV and the system comprises a second ITFV according to any of claims 1 to 7.

10. An aircraft comprising the ITFV according to any of claims 1 to 7 and/or the hydraulic system according to claims 8 or 9.

11. A method of operating an ITFV comprising:
actuating an intermediate spool to an active position by supplying hydraulic fluid at pressure greater than a predetermined activation pressure to an activation chamber of the ITFV, and actuating the intermediate spool to a bypass position if pressure in the activation chamber falls below the predetermined activation pressure;
actuating an inner spool in a first direction or a second direction responsive to a pressure differential acting across the inner spool; wherein
the inner spool is located within the intermediate spool.

12. The method of claim 11, wherein
actuating the inner spool comprises actuating the inner spool responsive to a pressure difference between a first pressure chamber and a second pressure chamber of the ITFV.

13. The method of claim 12, comprising
measuring the position of the inner spool and determining a pressure difference of the chambers based on the measured position.

14. The method of claim 13, comprising fixing the position of the inner spool relative to the intermediate spool and thereby driving the intermediate spool.

15. A method of operating a hydraulic system comprising two ITFVs, the method comprising performing the method according to any of claims 11 to 14 for each ITFV.
